# EUROPEAN PATENT APPLICATION

(11) **EP 4 336 452 A1**
(43) Date of publication of application: **13.03.2024**
(21) Application number: 22194797.1
(22) Date of filing: 09.09.2022
(51) Int. Cl.: G06T 11/00

(54) **COMPUTER-IMPLEMENTED METHOD FOR PROCESSING SPECTRAL COMPUTED TOMOGRAPHY (SPECTRAL CT) DATA, COMPUTER PROGRAM AND SPECTRAL CT SYSTEM**

(71) Applicant: Koninklijke Philips N.V., 5656 AG Eindhoven (NL)
(72) Inventor: WISCHMANN, Hans-Aloys, Eindhoven (NL); GRAß, Michael, Eindhoven (NL)
(74) Representative: Philips Intellectual Property & Standards

(57) **Abstract**

The invention relates to a computer-implemented method (1) for processing spectral computed tomography, spectral CT, data. According to the method (1), spectral CT projection data (2) is received. Then, reconstruction (3) and material decomposition (4) is performed on the spectral CT projection data (2) to obtain three-dimensional material data (5). Further, a stack of processed images (7) is generated based on the three-dimensional material data (5). In particular, the stack of processed images (7) may resemble a stack of magnetic resonance imaging, MRI, images. The invention further relates to a corresponding computer program and to a corresponding spectral CT system.

## Description

### FIELD OF THE INVENTION

The invention relates to a computer-implemented method for processing spectral computed tomography (spectral CT) data, to a related computer program and to a related spectral computed tomography system.

### BACKGROUND OF THE INVENTION

Spectral CT provides another dimension of information beyond the 3D high-resolution absorption images that CT captures, enabling, e.g., quantitative material decomposition, without increasing acquisition time or patient dose, see, e.g., International patent application WO 2007/034359 A3.

Some modern CT scanners operate in an "always on" paradigm, where radiologists and clinicians can decide whether or not to review the additional information post hoc after the acquisition is completed. Unfortunately, this is rarely done in routine clinical workflows, as it increases the reading complexity from 3D to N times 3D, where N is the number of energy bins recorded, or even 4D in case of photon counting detectors. While a single 3D image stack can be efficiently reviewed by scrolling through the stack, or in an ortho viewer, the side-by-side display of two co-registered stacks with synchronized scrolling regularly represents the limit for humans. These perceptual limits are exceeded already by current spectral CT image stacks that comprise a number N of absorption values at different energies for each 3D voxel.

Hence, there is a need for improved displaying of spectral CT results.

### SUMMARY OF THE INVENTION

It is an object of the present invention to provide a computer-implemented method for processing spectral CT data, a related computer program and a related spectral CT system that enable an improved display of spectral CT results.

The object of the present invention is solved by the subject-matter of the independent claims, wherein further embodiments are incorporated in the dependent claims.

In an aspect of the present invention, a computer-implemented method for processing spectral computed tomography (spectral CT) data is provided. In this context, the computer may be any kind of computer suitable for this method. In particular, the computer may be a processing computer of a spectral CT system, the computer may be allocated to a medical image viewer, in particular to a remote medical image viewer or the computer may be a cloud computing solution. Also, the method may be split to more than one computer, e.g., a processing computer of the spectral CT system may perform a first part of the method and a computer allocated to the (remote) medical image viewer may perform a second part of the method. The method may be processed by the computer in real time or may be processed off-line.

According to the method, spectral CT projection data is received. In this context, the spectral CT projection data comprises CT projection datasets related to at least two spectra. The spectral CT projection data may have been obtained by using one detector and at least two different accelerating voltages, e.g., by rapidly switching the accelerating voltage, i.e., by the so-called fast-kVp switching method. The spectral CT projection data may also have been obtained with only one accelerating voltage and a detector that has at least two different spectral sensitivities. The spectral CT projection data may also have been obtained with only one accelerating voltage and a photon-counting detector, which provides a large number of energy bins, thus rich spectral information.

Then, reconstruction and material decomposition is performed on the spectral CT projection data to obtain three-dimensional material data. The reconstruction refers to the generation of three-dimensional data from the two-dimensional projection data. For the reconstruction, a plurality of methods are known. The material decomposition refers to the identification of materials from the spectral CT data. Said material decomposition may be restricted to clinically relevant materials, such as water, iron and calcium. The result of the material decomposition may be given, e.g., as a binary presence/absence flag, as a continuous probability, or as a concentration. The three-dimensional material data may be given as a three-dimensional lattice with voxels arranged in said lattice or as a stack of two-dimensional images.

Finally, a stack of processed images is generated based on the three-dimensional material data. Since the stack of processed images is based on the material decomposition of the spectral CT data, the stack of processed images comprises additional information compared to a stack of regular CT images. And due to the method described above, the stack of processed images is perfectly aligned with the stack of regular CT images.

According to an embodiment, the step of performing reconstruction and material decomposition on the spectral CT projection data to obtain three-dimensional material data comprises performing reconstruction on the spectral CT projection data to obtain three-dimensional spectral CT data and performing material decomposition on the three-dimensional spectral CT data to obtain the three-dimensional material data. Hence, the reconstruction is performed first and then the material decomposition is performed. The three-dimensional spectral CT data may be given, e.g., as a stack of spectral CT images. The material decomposition on the three-dimensional spectral CT data may be performed as a voxel-wise mapping, which also maintains the perfect alignment of the three-dimensional material data with a stack of regular CT images.

Alternatively, the step of performing reconstruction and material decomposition on the spectral CT projection data to obtain three-dimensional material data comprises performing material decomposition on the spectral CT projection data to obtain material projection data and performing reconstruction on the material projection data to obtain the three-dimensional material data. Hence, the material decomposition is performed first and then the reconstruction is performed.

Alternatively, the step of performing reconstruction and material decomposition on the spectral CT projection data to obtain three-dimensional material data comprises performing partial material decomposition on the spectral CT projection data to obtain partially decomposed projection data, performing reconstruction on the partially decomposed projection data to obtain three-dimensional partially decomposed data and perform final material decomposition on the three-dimensional partially decomposed data to obtain the three-dimensional material data. As an example, based on the spectral CT projection data obtained by a photon counting detector, a division into a photo-electric part and a Compton-scattering part may be performed (i.e., the partial material decomposition). On said partially decomposed projection data, the reconstruction is performed. And then a final material decomposition, from the photo-electric and Compton-scattering parts to materials, is performed.

According to an embodiment, the stack of processed images is displayed, in particular to a physician and/or radiologist. In particular, the stack of processed images may be displayed next to a stack of regular CT images, e.g., a stack of images with Hounsfield values. Two stacks of images can be regularly viewed by a physician and/or radiologist without a problem. Since the stack of processed images and the stack of regular CT images are perfectly aligned, the physician and/or radiologist can also easily compare the two stacks of images and identify features in one of the stacks of images with features in the other one of the stacks of images.

Alternatively, or additionally, the stack of processed images is saved, in particular to a non-volatile memory. The saved stack of processed images may then be viewed later, as described above, or be archived.

Alternatively, or additionally, the stack of processed images is transmitted, e.g., to a remote viewer or to a medical application.

Alternatively, or additionally, a medical diagnosis is performed based on the stack of processed images, with or without including information from the stack of regular CT images. Said medical diagnosis may be performed by a medical application. As an example, the medical diagnosis may be a detection and/or classification of a stenosis, which is in particular based on results relating to water and iron content, which is directly linked to the presence of blood. As another example, the medical diagnosis may be a determination of bone density, which is in particular based on the results relating to calcium content. As yet another example, the stack of processed images may be fed to an artificial intelligence (AI) model that was trained to detect and/or quantify specific findings.

In the following, several options for the material decomposition are given. If the material decomposition is performed on projection data, the steps are performed for each pixel of each projection image. If the material decomposition is performed on three-dimensional reconstructed data, the steps are performed for each voxel or, if the data is given as stack of images, on each pixel of each image of the stack.

According to an embodiment, the material decomposition is performed by fitting of material-specific absorption spectra to spectral information. In particular, the materials may be restricted to clinically relevant materials, such as water, iron and calcium.

Alternatively, or additionally, the material decomposition is performed by applying pre-defined energy thresholds, wherein each energy threshold may correspond to a clinically relevant material.

Alternatively, or additionally, the spectral information is used to separate out photo-electric, Compton and/or K-edge components of the X-ray absorption. The elements are then identified based on said components. For example, a two-dimensional space may be established with the photo-electric and Compton components and the elements may be identified based on their position in said two-dimensional photo-electric/Compton space. As another example, a three-dimensional space may be established with the photo-electric, Compton and K-edge components and the elements may be identified based on their position in said three-dimensional space. As yet another example, a higher dimensional space, i.e., a space with a dimension greater than three, may be established based on material and/or energy related components and the elements may be identified based on their position in said higher dimensional space.

Alternatively, or additionally, the material decomposition is performed by applying a knowledge-based, rule-based and/or artificial intelligence-based mapping from the spectral information in each pixel or in each voxel to a material. Here, the spectral information may be given as a vector for each pixel or voxel. In the case of the knowledge-based or rule-based mapping, the mapping criteria have been chosen manually, whereas in the artificial intelligence-based mapping, the mapping has been trained with a plurality of training samples.

According to an embodiment, the stack of processed images resembles a stack of magnetic resonance imaging (MRI) images. That is, the material decomposition is used to generate images that look as if they had been taken with an MRI system.

As an example, a number of materials (e.g., air, bones with calcium, water such as in cerebrospinal fluid, water with iron such as in blood, and fat such as in scalp and grey matter) may be translated directly into an MRI-like image. For said translation, a rule-based, a knowledge-based, and/or an artificial intelligence-based lookup may be used. As one rule-based example, the (noisy) information from the material decomposition values can be augmented by information derived from Hounsfield values in the stack of regular CT images, as these absorption values can be mapped to typical tissue types, especially if the mapping table takes the imaged anatomy (e.g., head, thorax, abdomen, or extremities) into account. Here, the imaged anatomy may be taken from an image header or derived from a probabilistic atlas or other detection methods. Using this method, the anatomical structure boundaries are accurate to the voxel for the particular patient, and only the MRI grey values are approximated.

As another example for an MRI-like image, a black blood MRI image may be emulated. That is, vessels, e.g., as defined as a particular combination of water and iron, may be removed from the image. For the remainder of the image, either MRI-like grey values may be obtained, as described above, or the original CT image may be used.

It has to be noted that the above described method of creating an MRI-like image from spectral CT data may be used to get a more complete picture of a patient while avoiding an extra MRI scan of the patient and thus saving costs and time. Also, in comparison to two separate scans, an alignment between the two scans does not have to be performed, since the stack of regular CT images and the stack of processed images are already perfectly aligned. Further, many physicians and/or radiologists are used to viewing both CT images and MRI images, hence viewing perfectly aligned CT images and MRI-like images next to one another is both easy for them and provides additional information.

Further, in cases where both a spectral CT scan and an MRI scan have been taken of patients with metal implants, the MRI-like image obtained from the spectral CT scan may be used to replace metal artefacts in the vicinity of the metal in the MRI image.

Also, in case an MRI scan is to be performed after a spectral CT scan, the material decomposition from the spectral CT scan can be used to pre-determine optimized MRI image parameters or protocols, and/or eliminate the need for MRI calibration steps.

In comparison to the inverse mapping, i.e., of MRI images to CT absorption images, which is well-known and, e.g., used for radiation therapy planning, the above described method of mapping spectral CT images to MRI-like images has the advantage that the CT scan may be acquired faster and is therefore preferable especially in cases where time is scarce, e.g., in emergency room settings, and that the CT scan may be performed for patients that cannot undergo an MRI scan, e.g., due to certain implants, incompatible pacemakers, claustrophobia, and/or an inability to stay motionless for the longer imaging durations.

Also, there are advantages of the above described method of generating MRI-like images from spectral CT data over previous attempts to map CT images to MRI images. In said previous attempts, information missing in the CT image stack has been imputed, e.g., by deep learning methods, for example by training convolutional neural networks (CNNs) on co-registered MRI and CT datasets. The MRI-like images that result from said inference by these CNNs, however, do not show patient-individual anatomical structures, but, at best, average contrasts for anatomical structures seen in the training dataset for a CT that is similar to the actual patient's CT. The results can thus be phrased as a Bayesian estimate of an MRI from the ensemble of matched CT and MRI datasets, given the actual patient's CT image as a prior. That is, the resulting anatomical details have little or nothing to do with the particular patient's actual anatomy and are therefore of little or no use for clinical screening or diagnosis. On the other hand, with the above described method, no structures have been added, which makes the resulting stack of processed images suitable for clinical screening or diagnosis.

According to an embodiment, MRI image properties of the MRI images are selectable. Said MRI image properties may be an MRI contrast, a magnetic field strength of the resembled MRI image and/or the weighting of the resembled MRI image, i.e., T1-weighting or T2-weighting. Said selection of MRI image properties may be a pre-determined selection or an interactive selection where the physician and/or radiologist may choose the MRI image properties while viewing the stack of processed images. Also, further stacks of images may be generated, each with different MRI image properties and a physician and/or radiologist may choose which stack of images he/she wants to view.

According to an embodiment, the stack of processed images shows at least one concentration and/or probability of an element. Said concentration and/or probability may be shown using a grey scale or color scale. As an example, this allows to directly quantify an iron content, e.g., in the liver, without a need for calibration that is required for an actual MRI image. As another example, sites of internal bleeding, e.g., abdominal bleeding, may be detected by following the flow of blood, as indicated by the iron concentration, without a need for contrast agents.

According to an embodiment, the method further comprises applying smoothing over volumes to the three-dimensional data, in particular to the three-dimensional material data, the three-dimensional spectral CT data, the three-dimensional partially decomposed data and/or the stack of processed images. Said smoothing is particularly beneficial for materials that are present in very low concentrations, such as iron. For these elements, the probability and/or the concentration values in each voxel may exhibit noise which is significantly reduced by the smoothing.

According to an embodiment, each volume is a specific region. Said specific region is, in particular, a region in which similar material probabilities and/or concentrations are to be expected, and/or regions with the same Hounsfield values. Hence, smoothing over said specific region provides a noise-reduced result of the material probabilities and/or concentrations. Alternatively, each volume over which the smoothing is performed is a line of voxels, a disk of voxels and/or a sphere of voxels inside the specific region. The line of voxels is, in particular, taken perpendicular to an image plane of the images of the stack of images. The disk of voxels is, in particular, taken inside the image plane of the images of the stack of images, i.e., the smoothing may applied for each image. Also, a combination may be used, in particular of the line of voxels and the disk of voxels, to apply the smoothing over a cylinder inside the specific region. In this context, "inside the specific region" means that, once the specific region has been determined, the line of voxels is taken only from one boundary of the specific region to the other boundary of the specific region. In other words, smoothing over the line of voxels may be thought as a 3D to 2D projection, wherein averaging is applied only inside the specific region. For a disk or a sphere, the area of the disk or the volume of the sphere may be delimited by the boundary of the specific region.

According to an embodiment, the specific region is an organ, a part of an organ and/or a region with voxels having similar properties. A part of an organ may be, e.g., a lung lobe, a liver lobe, a heart chamber or a lobe in the brain. The voxels having similar properties may be chosen based on a material probability or concentration that has a relatively low noise and the smoothing will then reduce the noise of probabilities and/or concentrations of other materials.

According to an embodiment, a boundary of the specific region is obtained using a Hounsfield greyscale, i.e., using direct information from the stack of regular CT images. In particular, edge detection may be applied to said Hounsfield greyscale images, either in 2D or in 3D. Also, connected areas and/or connected volumes may be detected using the Hounsfield greyscale images to determine the specific regions.

Alternatively, or additionally, the boundary of the specific region is obtained using the three-dimensional material data, in particular the probabilities and/or concentrations of materials. Preferably, the probabilities and/or concentrations of materials that exhibit a low noise may be used to obtain the boundary of the specific region. As above, this may be performed using edge detection, either in 2D or in 3D, or statistical or machine learning clustering approaches. For said edge detection, some initial smoothing may be applied and a noise estimate may be obtained such that the edge is only detected when it significantly exceeds the noise.

Alternatively, or additionally, the boundary of the specific region is obtained using a segmentation of the stack of processed images. Said segmentation may be based, e.g., on an atlas, on computer vision and/or on deep learning.

It has to be noted that said boundaries of the specific regions are based on the measurements of the particular patient and may be accurate to the resolution of the stack of regular CT images, i.e., to the resolution of the original spectral CT data. Hence, there are sharp boundaries that are filled with smoothed results, that are used to generate the stack of processed images.

According to an embodiment, de-noising of the spectral CT projection data is performed. Said de-noising may be artificial intelligence enabled or rule-based. With said de-noising, the results of the material decomposition will also be less noisy.

Additionally, or alternatively, de-noising is performed on the three-dimensional material data. Again, this de-noising may be artificial intelligence enabled or rule-based.

Additionally, or alternatively, de-noising is performed on intermediate data, in particular on three-dimensional spectral CT data, on material projection data, on partially decomposed projection data and/or on three-dimensional partially decomposed data. Again, the de-noising may be artificial intelligence enabled or rule-based.

According to an embodiment, the method further comprises performing a quantification by material of the stack of processed images. In this context, quantification by material may include a determination of the concentrations of materials. As an example, the separate concentrations for several materials may be indicated and/or displayed. Said quantification by material may be performed within each specific region. That is, for each specific region, concentrations of materials may be indicated and/or displayed. Alternatively, or additionally, the quantification by material may be performed within a user-defined region. This may be a single voxel selected by a user or a region or structure of interest that is manually or semi-automatically delineated with user input. The material parameters for said voxel, region and/or structure are determined and displayed.

In another aspect of the invention, a computer program is provided. Said computer program comprises instructions which, when the program is executed by a computing unit, cause the computing unit to carry out the above described method. Hence, details and advantages of said computer program are given above. In particular, the software solution may be adapted to run on a console of a spectral CT system, may be directly integrated into a picture archiving and communication system (PACS), into an image viewer, into a diagnostic reading workspot and/or into an image post-processing workstation. Alternatively, it can be deployed in a standalone manner either on premise or in the cloud, as a digital imaging and communications in medicine (DICOM) endpoint that is designated to process spectral CT images which are routed to it either by configuration of the spectral CT modality, by a user interaction, or by a workflow orchestrator. In particular, the computer program may be split to more than one computer, wherein one of the computers carries out one part of the method and another one of the computers carries out another part of the method.

In yet another aspect of the invention, a spectral computed tomography (spectral CT) system is provided. Said spectral CT system is configured to carry out the method according to the above description. Hence, details and advantages of said spectral CT system are given above.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following, preferred embodiments of the invention will be described, by way of example only, and with reference to the drawings in which:
Fig. 1a shows a flowchart of an embodiment of a method for processing CT spectral data;
Figs. 1b to Id show flowcharts of options of a part of the method of Fig. 1a;
Fig. 2 shows a flowchart of another embodiment of a method for processing CT spectral data;
Fig. 3 shows a flowchart of yet another embodiment of a method for processing CT spectral data;
Fig. 4 shows a flowchart of yet another embodiment of a method for processing CT spectral data;
Figs. 5a to 5d schematically show an organ;
Fig. 6 shows an example of a first image side-by-side with a second image;
Fig. 7 shows another example of a first image side-by-side with a second image; and
Fig. 8 shows yet another example of first images side-by-side with second images.

### DETAILED DESCRIPTION OF EMBODIMENTS

Like numbered elements in these figures are either equivalent elements or perform the same function. Elements which have been discussed previously will not necessarily be discussed in later figures if the function is equivalent.

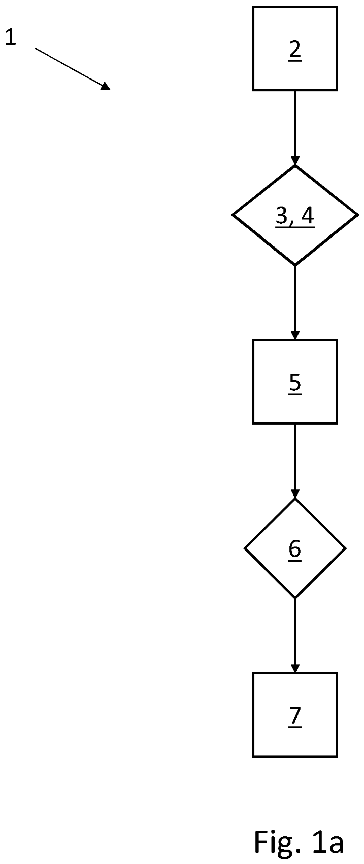

Fig. 1a shows a flowchart of an embodiment of a computer-implemented method 1 for processing spectral computed tomography (spectral CT) data. In this context, the computer may be any kind of computer suitable for this method 1. In particular, the computer may be a processing computer of a spectral CT system, the computer may be allocated to a medical image viewer, in particular to a remote medical image viewer or the computer may be a cloud computing solution. Also, "the computer" may refer to more than one computer, wherein each of the separate computers performs a separate part of the method 1. The method 1 may be processed by the computer in real time or may be processed off-line.

First, spectral CT projection data 2 is received. In this context, the spectral CT projection data 2 comprises CT projection datasets related to at least two spectra. This spectral CT projection data 2 may have been obtained by using one detector and at least two different accelerating voltages, e.g., by rapidly switching the accelerating voltage, i.e., by the so-called fast-kVp switching method. The spectral CT projection data 2 may also have been obtained with only one accelerating voltage and a detector that has at least two different spectral sensitivities. The spectral CT projection data 2 may also have been obtained with only one accelerating voltage and a photon-counting detector, which provides a large number of energy bins and thus rich spectral information.

A reconstruction 3 and a material decomposition 4 are performed on the received spectral CT projection data 2 to obtain three-dimensional material data 5. Depending on the spectral information provided in the spectral CT images, the material decomposition may be performed, e.g., by fits to the spectrum or by solving a linear system of equations for the different spectral components. Said material decomposition may be restricted to clinically relevant materials, such as water, iron and calcium. The result of the material decomposition may be given, e.g., as a binary presence/absence flag, as a continuous probability, or as a concentration.

Then, a stack of processed images 7 is generated 6 based on the three-dimensional material data 5. Since the stack of processed images 7 is based on the material decomposition 4 of the spectral CT data, the stack of processed images 7 comprises additional information compared to a stack of regular CT images. And due to the method 1 described above, the stack of processed images 7 is perfectly aligned with the stack of regular CT images.

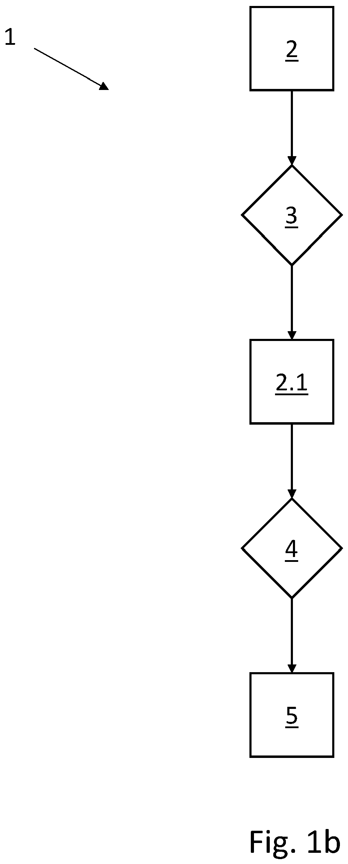

Figs. 1b to Id show flowcharts of different options for the step of performing reconstruction 3 and material decomposition 4 of the method 1 to generate the three-dimensional material data 5 from the spectral CT projection data 2.

As shown in Fig. 1b, reconstruction 3 may be applied to the spectral CT projection data 2 to obtain three-dimensional spectral CT data 2.1. Then, material decomposition 4 is performed on the three-dimensional spectral CT data 2.1 to obtain the three-dimensional material data 5.

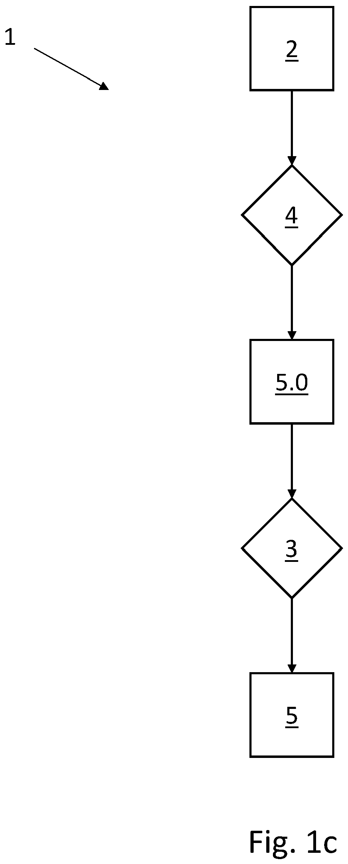

As shown in Fig. 1c, material decomposition 4 may be performed on the spectral CT projection data 2 to obtain material projection data 5.0. Then, reconstruction 3 is performed on the material projection data 5.0 to obtain the three-dimensional material data 5.

As shown in Fig. Id, partial material decomposition 4.1 may be performed on the spectral CT projection data 2 to obtain partially decomposed projection data 5.1. Then, reconstruction 3 is performed on the partially decomposed projection data 5.1 to obtain three-dimensional partially decomposed data 5.2 and final material decomposition 4.2 is performed on the three-dimensional partially decomposed data 5.2 to obtain the three-dimensional material data 5.

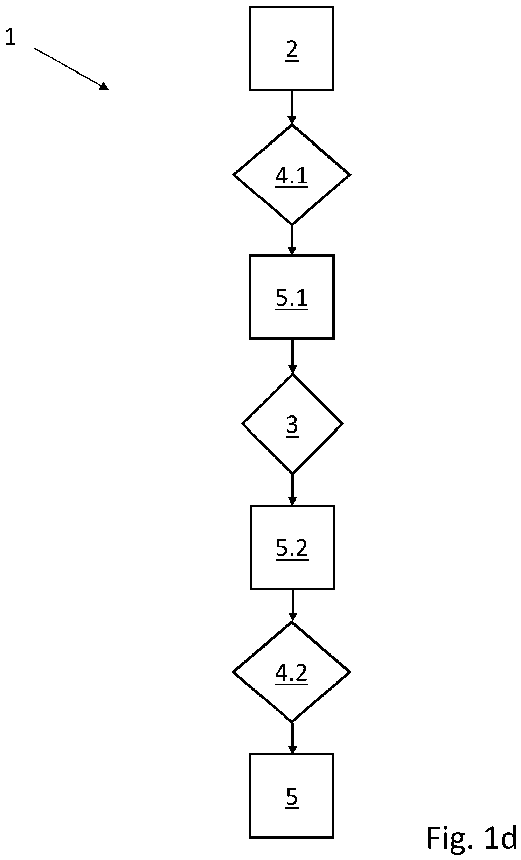

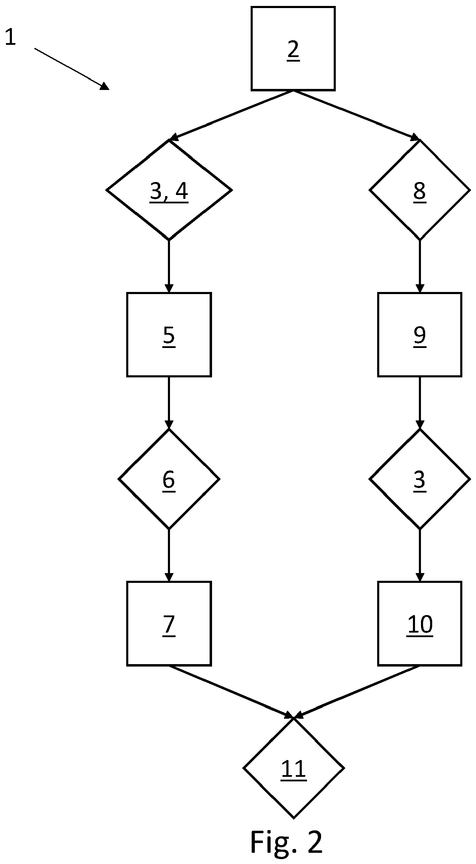

Fig. 2 shows a flowchart of another embodiment of a method 1 for processing CT spectral data. In addition to the method 1 shown in Fig. 1, this method 1 comprises extracting 8 regular Hounsfield values from the spectral CT projection data 2 to obtain regular CT projection data 9. Then, a reconstruction 3 is performed on the regular CT projection data 9 to obtain a stack of regular CT images 10. Finally, the stack of processed images 7 and the stack of regular CT images 10 are displayed 11, preferably side-to-side. Two stacks of images can be regularly viewed by a physician and/or radiologist without a problem. Since the stack of processed images 7 is perfectly aligned with the stack of regular CT images 10, the physician and/or radiologist can also easily compare the two stacks of images and identify features in one of the stacks of images with features in the other one of the stacks of images.

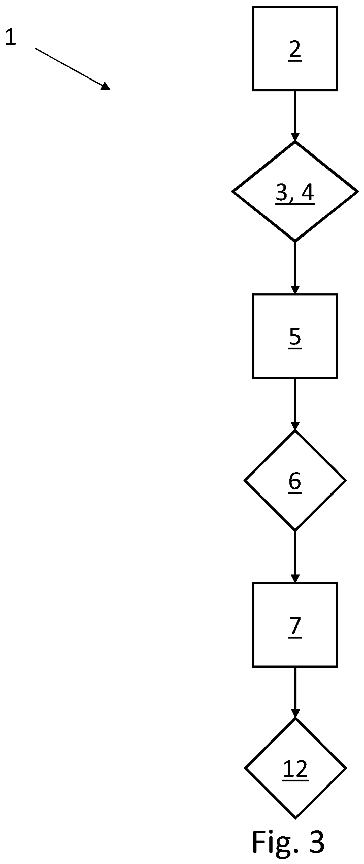

Fig. 3 shows a flowchart of yet another embodiment of a method 1 for processing spectral CT data. In addition to the method 1 shown in Fig. 1, this method 1 comprises performing a medical diagnosis 12 based on the stack of processed images 7, with or without including information from the stack of regular CT images. Said medical diagnosis 12 may be performed by a medical application. As an example, the medical diagnosis 12 may be a detection and/or classification of a stenosis, which is in particular based on results relating to water and iron content, which is directly linked to the presence of blood. As another example, the medical diagnosis 12 may be a determination of bone density, which is in particular based on the results relating to calcium content. As yet another example, the stack of processed images 7 may be fed to an artificial intelligence (AI) model that was trained to detect and/or quantify specific findings.

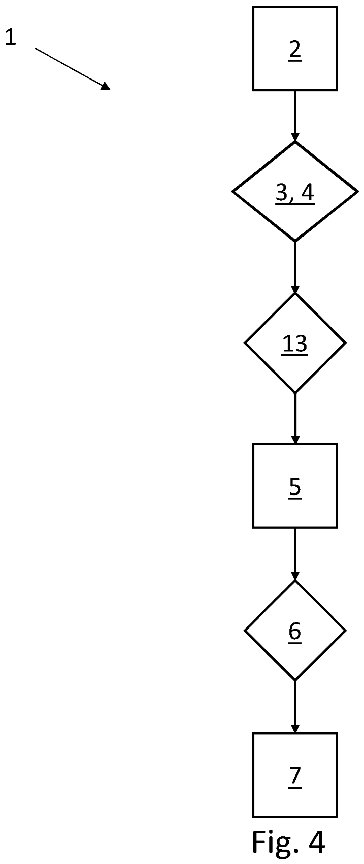

Fig. 4 shows a flowchart of yet another embodiment of a method 1 for processing spectral CT data. In addition to the method 1 shown in Fig. 1, this method 1 comprises a step of applying smoothing 13 over volumes to the three-dimensional data. In particular, the smoothing 13 may be applied to the three-dimensional spectral CT data 2.1 and/or to the three-dimensional partially decomposed data 5.2. Alternatively, or additionally, the smoothing 13 may be applied to the three-dimensional material data 5 and/or the stack of processed images (not shown here). Smoothing 13 over said volumes reduces or eliminates noise present in the images. It is particularly beneficial for materials that are present in very low concentrations, such as iron. For these elements, the probability and/or the concentration values in each voxel may exhibit noise which is significantly reduced by the smoothing 13. A subsequent medical diagnosis 12 also benefits from the smoothing 13. Further, smoothed 13 images are better to view and provide better information when being displayed 11.

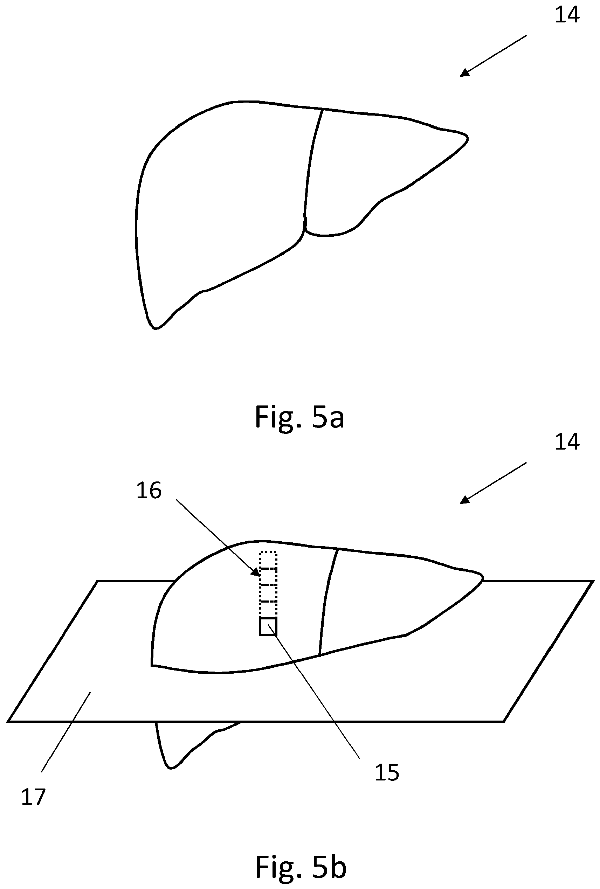

Fig. 5a shows a schematic view of a liver as an example of an organ 14. Boundaries of said liver may have been obtained using a Hounsfield greyscale, using the three-dimensional material data 5 and/or using a segmentation. In one embodiment of the method 1, smoothing 13 may be performed over the whole organ 14, i.e., over the whole liver.

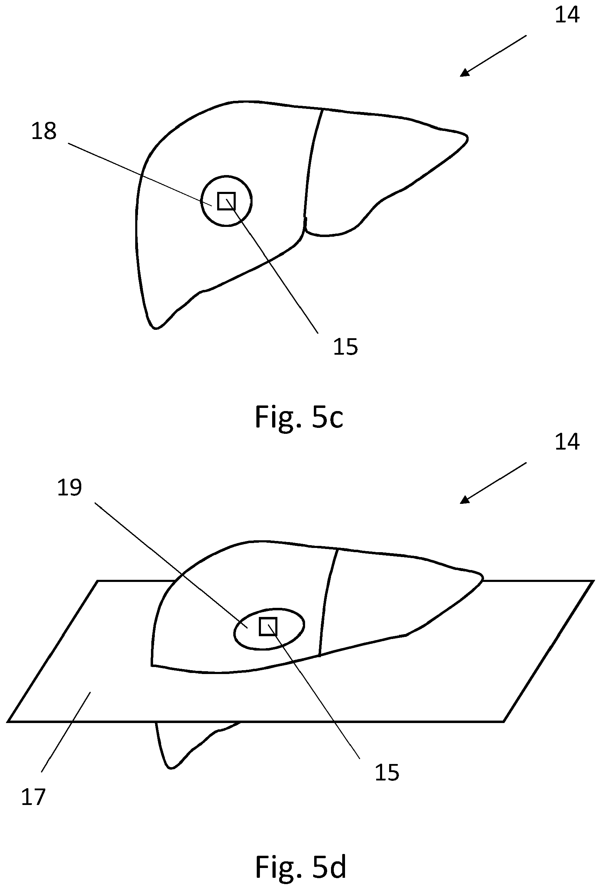

Alternatively, smoothing 13 for a particular voxel 15 may be applied over a line of voxels 16, which is shown with dotted lines, as shown in Fig. 5b. Said line of voxels 16 ends at the boundary of the organ 14 and is perpendicular to an image plane 17 of an image of the stack of processed images 7. Hence, the smoothing 13 in this case is like a projection of the 3D stack of images to the 2D image. Alternatively, smoothing for the particular voxel 15 may be applied over a sphere 18 in three dimensions as shown in Fig. 5c or over a disk 19, in particular a disk 19 that lies within the image plane 17, in two dimensions, as shown in Figure 5d.

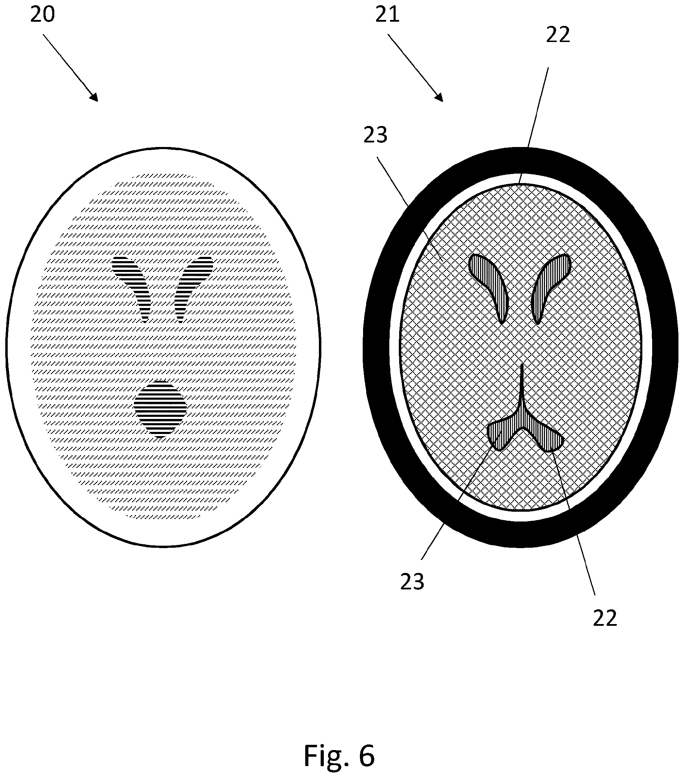

Fig. 6 shows a side-by-side view of a first image 20 of the stack of regular CT images 10 on the left and a second image 21 of the stack of processed images 7 on the right, showing a scan of a head. Here, the stack of processed images 7 resembles a magnetic resonance imaging (MRI) image. The second image 21 is perfectly aligned to the first image 20. It is to be noted that in the first image 20, only greyscale values are visible. In the second image 21, however, also boundaries 22 from a segmentation are visible, which delimit separate specific regions 23 of the head, over which the three-dimensional data has been smoothed. Two such images can easily be viewed side-by-side by a physician and/or radiologist, and the information contained in the spectral CT data is beneficially used.

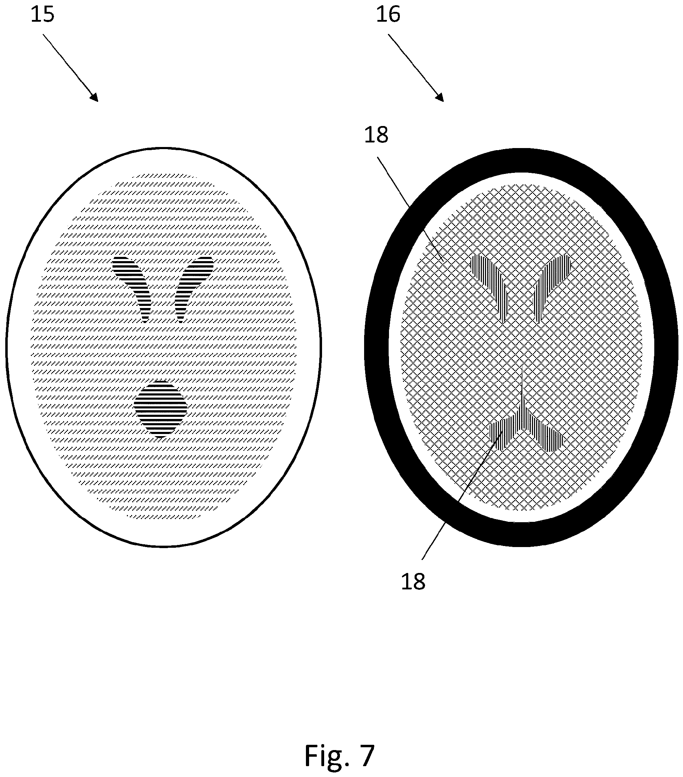

Fig. 7 shows another example of a side-by-side view of a first image 20 and a second image 21. Compared to the images shown in Fig. 6, the boundaries 22 in the second image 21 have been omitted.

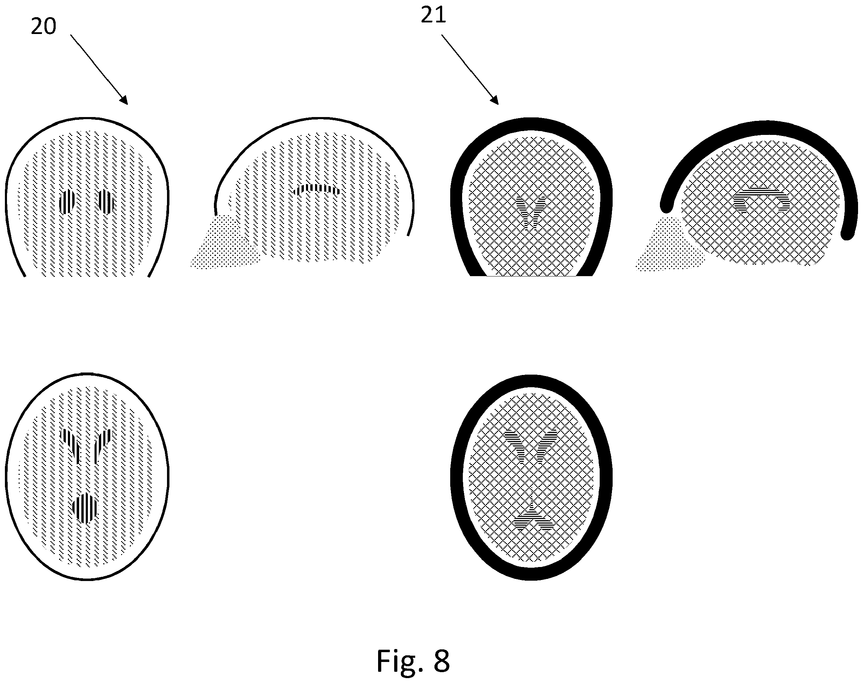

Finally, Fig. 8 shows a side-by-side view of first images 20 and second images 21, where for both the first images 20 and the second images 21, coronal, sagittal and axial views of the head are provided.

While the invention has been illustrated and described in detail in the drawings and foregoing description, such illustration and description are to be considered illustrative or exemplary and not restrictive; the invention is not limited to the disclosed embodiments. In particular, several of the above embodiments may be combined.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

### LIST OF REFERENCE SIGNS:

- 1: method
- 2: spectral CT projection data
- 2.1: three-dimensional spectral CT data
- 3: reconstruction
- 4: material decomposition
- 4.1: partial material decomposition
- 4.2: final material decomposition
- 5: three-dimensional material data
- 5.0: material projection data
- 5.1: partially decomposed projection data
- 5.2: three-dimensional partially decomposed data
- 6: generation
- 7: stack of processed images
- 8: extraction
- 9: regular CT projection data
- 10: stack of regular CT images
- 11: displaying
- 12: performing a medical diagnosis
- 13: smoothing
- 14: organ
- 15: voxel
- 16: line of voxels
- 17: image plane
- 18: sphere
- 19: disk
- 20: first image
- 21: second image
- 22: boundary
- 23: specific region

## Claims

1. Computer-implemented method (1) for processing spectral computed tomography, spectral CT, data, comprising the steps of:
receiving spectral CT projection data (2);
performing reconstruction (3) and material decomposition (4) on the spectral CT projection data (2) to obtain three-dimensional material data (5); and
generating (6) a stack of processed images (7) based on the three-dimensional material data (5).

2. Method (1) according to claim 1, wherein the step of performing reconstruction (3) and material decomposition (4) on the spectral CT projection data (2) to obtain three-dimensional material data (5) comprises one out of the following:
performing reconstruction (3) on the spectral CT projection data (2) to obtain three-dimensional spectral CT data (2.1) and performing material decomposition (4) on the three-dimensional spectral CT data (2.1) to obtain the three-dimensional material data (5);
performing material decomposition (4) on the spectral CT projection data (2) to obtain material projection data (5.0) and performing reconstruction (3) on the material projection data (5.0) to obtain the three-dimensional material data (5); and
performing partial material decomposition (4.1) on the spectral CT projection data (2) to obtain partially decomposed projection data (5.1), performing reconstruction (3) on the partially decomposed projection data (5.1) to obtain three-dimensional partially decomposed data (5.2) and perform final material decomposition (4.2) on the three-dimensional partially decomposed data (5.2) to obtain the three-dimensional material data (5).

3. Method (1) according to claim 1 or 2, further comprising: displaying (11) the stack of processed images (7), saving the stack of processed images (7), transmitting the stack of processed images (7) and/or performing a medical diagnosis (12) based on the stack of processed images (7), with or without including information from a stack of regular CT images (10).

4. Method (1) according to any of claims 1 to 3, wherein the material decomposition (4) is performed by at least one of the following:
fitting of material-specific absorption spectra to spectral information;
applying pre-defined energy thresholds;
using the spectral information to separate out photo-electric, Compton and/or K-edge components of the X-Ray absorption and subsequently identifying elements based on said components; and
applying a knowledge-based, rule-based and/or artificial intelligence-based mapping from the spectral information to a material.

5. Method (1) according to any of claims 1 to 4, wherein the stack of processed images (7) resembles a stack of magnetic resonance imaging, MRI, images.

6. Method (1) according to claim 5, wherein MRI image properties, in particular an MRI contrast, of the MRI images are selectable.

7. Method (1) according to any of claims 1 to 6, wherein the stack of processed images (7) shows at least one concentration and/or probability of an element.

8. Method (1) according to any of claims 1 to 7, further comprising: applying smoothing (13) over volumes to the three-dimensional data (2.1; 5; 5.2; 7).

9. Method (1) according to claim 8, wherein each volume is a specific region (23) or a line of voxels (16), a disk (19) of voxels and/or a sphere (18) of voxels inside the specific region (23).

10. Method (1) according to claim 9, wherein the specific region (23) is an organ (14), a part of an organ, and/or a region with voxels (15) having similar properties.

11. Method (1) according to claim 9 or 10, wherein a boundary (22) of the specific region (23) is obtained from at least one of the following:
a Hounsfield greyscale;
the three-dimensional material data (2.1; 5; 5.2; 7); and
a segmentation.

12. Method (1) according to any of claims 1 to 11, further comprising: performing de-noising of the spectral CT projection data (2), of the three-dimensional material data (5) and/or of intermediate data (2.1; 5.0; 5.1; 5.2).

13. Method (1) according to any of claims 1 to 12, further comprising: performing a quantification by material of the stack of processed images (7), in particular within each specific region (23) and/or within a user-defined region.

14. Computer program comprising instructions which, when the program is executed by a computing unit, cause the computing unit to carry out the method (1) according to any of claims 1 to 13.

15. Spectral computed tomography, spectral CT, system, configured to carry out the method (1) according to any of claims 1 to 13.
